**Europäisches Patentamt**

**European Patent Office**

**Office européen des brevets**

(11) Veröffentlichungsnummer: **0 108 394 B1**

(12) **EUROPÄISCHE PATENTSCHRIFT**

(45) Veröffentlichungstag der Patentschrift:
**14.06.89**

(21) Anmeldenummer: **83110945.9**

(22) Anmeldetag: **03.11.83**

(51) Int. Cl.⁴: **B 60 B 17/00**

(54) Schwingungsgedämpftes Schienenrad.

(30) Priorität: **06.11.82 DE 3241056**

(43) Veröffentlichungstag der Anmeldung:
**16.05.84 Patentblatt 84/20**

(45) Bekanntmachung des Hinweises auf die Patenterteilung:
**14.06.89 Patentblatt 89/24**

(84) Benannte Vertragsstaaten:
**AT CH DE FR GB IT LI SE**

(56) Entgegenhaltungen:
**DE-C- 1 605 832**
**GB-A- 1 805**
**US-A- 1 819 266**
**US-A- 2 024 375**

(73) Patentinhaber: **VEREINIGTE SCHMIEDEWERKE GMBH,
Alleestrasse 70, D-4630 Bochum (DE)**

(72) Erfinder: **Piehl, Karlheinz, Dipl.-Ing. Dr.-Ing., Kantorie 40,
D-4300 Essen 1 (DE)**
Erfinder: **Reichel, Hans-Henning, Dr.-Ing. Dipl.-Ing.,
Schlüterweg 31, D-4630 Bochum (DE)**
Erfinder: **Hoffmann, Manfred, Dipl.-Ing., Pangesweg 1G,
D-3500 Kassel-Brasselsberg (DE)**

(74) Vertreter: **Patentanwaltsbüro Cohausz & Florack,
Schumannstrasse 97, D-4000 Düsseldorf 1 (DE)**

ACTORUM AG

## Beschreibung

Die Erfindung bezieht sich auf ein schwindungsgedämpftes Rad, insbesondere für Schienenfahrzeuge, mit in einem oder mehrere über den Radumfang verteilt angeordneten Hohlraum bzw. Hohlräumen gefülltem, granuliertem, körnigem oder kugeligem Material als Dämpfungsmaterial.

Es ist bekannt, daß beim Befahren von Schienen, insbesondere in Kurven, kreischende Fahrgeräusche auftreten, die durch Schwingungen des Radkranzes, des Radreifens und der Radscheibe verursacht werden.

Um diese Geräusche zu beseitigen, hat man bereits vor einigen Jahrzehnten Versuche zur Dämpfung dieser Schwingungen unternommen. So ist bereits vorgeschlagen worden, die Radscheibe mit dämpfenden, elastischen Belägen zu versehen oder Hohlräume im Radreifen mit losem Schüttgut, wie Stahlkies, zu füllen (DVI-Zeitschrift, Bd. 96, Februar 1954, S. 175) oder in einer offenen oder geschlossenen Ringnut des Radreifens oder der Radfelge eine Vielzahl von Plättchen anzuordnen, die vorzugsweise mit einem Film aus einem schmiermittelartigen Werkstoff höchster Zähigkeit überzogen und am Radkörper anliegen (DE-C 833 362).

Die Anordnung der Dämpfungselemente bei einem solchen Schienenrad macht also Sonderkonstruktionen erforderlich, die Einfluß auf die Statik des Rades haben. Herkömmliche Schienenräder in bewährter Konstruktion lassen sich mit solchen Dämpfungselementen weder als Erstausrüstung noch als Nachausrüstung ausstatten. Auch sind aufgrund der Konstruktion die räumlichen Verhältnisse für die Unterbringung der Dämpfungselemente begrenzt.

Bei einer sehr alten Konstruktion eines Schienenrades (GB-A 1805 A.D. 1911) ist der gesamte Raum zwischen Nabe und Radreifen auf einer Seite des Rades mit Sand als schwingungsdämpfendem Material gefüllt. Dieser Raum ist durch Speichen in eine Vielzahl von Einzelkammern unterteilt, die außen durch ein Abdeckblech abgeschlossen sind. Bei einer dieser bekannten Konstruktionen ist die Verteilung so gewählt, daß die Kammern im Bereich der Radnabe ihre größte Höhe haben. Diesem Stand der Technik liegt offenbar der Gedanke zugrunde, daß möglichst viel Dämpfungsmaterial an einer Radseite angebracht sein muß, um wirksam dämpfen zu können. Viel Dämpfungsmasse bringt aber auch eine erhebliche Vergrößerung des Radgewichtes mit sich.

Bei einer anderen Konstruktion eines Radreifens (US-A 2 024 375) erstreckt sich der Raum für das schwingungsdämpfende Material ebenfalls über einen großen Teil der Radscheibe, und zwar bis über die Mitte der Radscheibe hinaus. Als schwingungsdämpfendes Material sind Substanzen wie Teer, Asphalt oder Schmiermittel, die bei normalen Temperaturen plastisch, bei leicht erhöhten Temperaturen aber flüssig sind, vorgesehen. Aufgrund dieser Temperaturabhängigkeit der Materialien ergibt sich ein in der Praxis unerwünschtes unterschiedliches Dämpfungsverhalten.

Statt dessen kommen in jüngster Zeit Schienenräder zum Einsatz, an deren Radkranz, Radreifen oder Radfelge Resonanzabsorber angebracht sind, die aus mehreren parallel zueinander auf derselben Basis angeordneten und durch Zwischenlagen aus Dämpfungsmaterial voneinander getrennten, auf verschiedene Eigenfrequenzen des Rades abgestimmten Zungen bestehen (DE-B 2 720 333).

Diesen Resonanzabsorbern liegt der Gedanke zugrunde, daß die Dämpfungswirkung umso größer ist, je genauer die Abstimmung der einzelnen Zungen auf die verschiedenen Eigenfrequenzen ist. Da sich jedoch während des Betriebs aufgrund des Verschleißes des Rades die Eigenfrequenzen des Rades verschieben, läßt die Wirksamkeit dieser Resonanzabsorber in der Dämpfung nach. Eine Nachabstimmung ist nicht vorgesehen.

Der Erfindung liegt die Aufgabe zugrunde, ein schwingungsgedämpftes Schienenrad zu schaffen, bei dem die Eigenschwingungen trotz des Einflusses des Verschleißes des Rades auf die Frequenzen dieser Eigenschwingungen unter Wahrung herkömmlicher Radkonstruktionen auf Dauer wirksam gedämpft werden.

Diese Aufgabe wird erfindungsgemäß dadurch gelöst, daß der Hohlraum sich im wesentlichen im Übergangsbereich zwischen Radscheibe und Radkranz bzw. Radfelge/Radreifen befindet und daß das granulierte, körnige oder kugelige Material eine Korngröße von 0,05 bis 10 mm, insbesondere von 0,3 bis 3 mm, aufweist.

Bei einem solchen schwingungsgedämpften Rad sind am Radkörper selbst keine besonderen Vorkehrungen für die Unterbringung des Dämpfungsmaterials erforderlich, vielmehr lassen sich bewährte Konstruktionen beibehalten. Die mit Dämpfungsmaterial gefüllten, außen am Rad angeordneten Hohlkörper dämpfen die Schwingungen breitbandig, so daß die Wirksamkeit der Dämpfungselemente trotz der sich infolge des Verschleißes ändernden Resonanzfrequenzen im Laufe der Zeit nicht nachläßt. Da im Stoß zwischen Feststoffteilchen die Energien nahezu unabhängig von der Frequenz umgewandelt werden, ist die Dämpfung über einen sehr weiten Frequenzbereich etwa gleichmäßig stark. Der Verzehr der vom Rad übertragenen Schwingungsenergie wird durch Reibung bzw. durch Stoß der Feststoffteilchen untereinander und an den Wänden des Hohlkörpers wirkungsvoll erreicht.

Bei der Anbringung der Dämpfungselemente am Rad ist zur Vermeidung von Unwuchten eine gleichmäßige Verteilung anzustreben. Erfindungsgemäß ist daher vorgesehen, daß der Hohlkörper ringförmig und konzentrisch am Rad angeordnet ist und insbesondere in mehrere Kammern unterteilt ist. Auf diese Weise wird eine gleichmäßige Belegung des Rades durch die Dämpfungselemente erreicht. Durch die Unterteilung des Hohlkörpers in mehrere Kammern wird einer unkontrollierten Verschiebung des körnigen Füllmaterials entgegengewirkt.

Nach einer Ausgestaltung der Erfindung ist von Vorteil, wenn der Hohlraum in mehrere Kammern unterteilt ist. Die Kammern können mit gegenseitigem Abstand voneinander angeordnet sein. Entsprechend den räumlichen Gegebenheiten können alle Hohlkörper auf der Oberfläche einer einzigen Radseite oder aber auch auf beiden Radseiten verteilt angeordnet sein. Wichtig ist auch in diesem Fall, daß die Anordnung der mit dem Dämpfungsmaterial gefüllten Hohlkörper derart erfolgt, daß Unwuchten des Rades vermieden werden.

Eine besonders einfache konstruktive Ausgestaltung der Hohlkörper besteht darin, daß die Hohlkörper jeweils aus einem am Rad angesetzten, schalenförmigen Profil und der Radoberfläche bestehen. In diesem Fall ist die Schwingungskopplung zwischen dem Dämpfungsmaterial und dem Rad unmittelbar, was sich auf die Dämpfungswirkung positiv auswirkt. Die Form der Profile ist in weiten Bereichen beliebig und richtet sich selbstverständlich nach dem Konstruktionsmerkmal des Rades sowie dem am Einbauort zur Verfügung stehenden Raum.

Die schalenförmigen Teile können aus Metall oder Kunststoff, Gußmaterial oder auch als Preßteil gefertigt sein. Sie dienen im wesentlichen der Begrenzung des Raumes und müssen die für den rauhen Bahnbetrieb erforderliche Festigkeit aufweisen. Um das Eindringen von Feuchtigkeit bzw. den Verlust von Dämpfungsmaterial zu vermeiden, sind die schalenförmigen Profile unter Verwendung einer dichtenden Zwischenlage an der Radoberfläche befestigt. Solche Zwischenlagen können z. B. aus Asbest, Gummi oder Plastikmaterial gefertigt sein.

Die Profile können am Rad durch Verschrauben, Verschweißen oder Kleben befestigt sein. Falls sie als geschlossener Ring ausgebildet sind, bietet es sich auch an, die Profile durch Einschrumpfen in der Radkontur zu befestigen.

Die als Hohlräume ausgebildeten Dämpfungskörper sind bevorzugt mit körnigem Material einer Korngröße von 0,05–10, insbes. 0,3–3 mm, gefüllt. Die Füllung kann aus Material einer einheitlichen Korngröße oder aber aus Gemischen der unterschiedlichsten Korngrößen bestehen. Die bevorzugte Körnung bzw. das Körnungsband des Füllmaterials des Hohlkörpers richtet sich u.a. nach dem Schüttgewicht des Füllmaterials. Im Hinblick auf eine breitbandige Dämpfung ist es besonders wirkungsvoll, wenn die Hohlräume ein Material enthalten, das ein Schüttgewicht von 0,2 bis 10 g/cm$^3$ und einen E-Modul von 100.000 bis 300.000 N/mm$^2$ aufweist. Solche Materialien sind beispielsweise Sand, Stahlkies und Bleischrot. Für eine optimale Dämpfung ist es wichtig, daß die Hohlräume vollständig mit dem körnigen Material gefüllt sind. Zusätzlich können die Hohlräume bis zu 10% viskoses Material, wie z.B. Öl oder Harze, enthalten, die sich in den Zwischenräumen des körnigen Materials befinden und eine zusätzliche Dämpfung der zwischen den Teilchen ablaufenden Stoßprozesse bewirken.

Im folgenden wird die Erfindung beispielsweise anhand der Zeichnung dargestellt. Im einzelnen zeigen

Fig. 1 einen Schnitt durch ein als Vollrad ausgebildetes Schienenrad,

Fig. 2 einen Schnitt durch ein bereiftes Schienenrad,

Fig. 3 ein Schienenrad in Aufsicht.

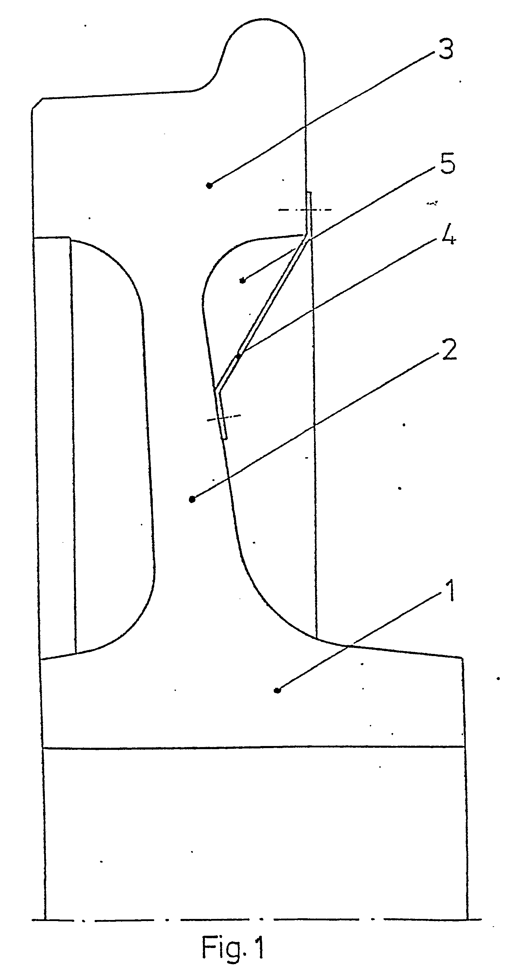

Das in Fig. 1 dargestellte Schienenrad ist als Vollrad ausgebildet. Es besteht aus der Nabe 1, der Radscheibe 2 und dem Radkranz 3. Im Bereich des Überganges von der Radscheibe 2 zum Radkranz 3 sind einen Hohlraum 5 begrenzende Hohlkörper vorgesehen, die von der Wandung des Übergangsbereichs von der Radscheibe 2 zum Radkranz 3 und Profilen 4 gebildet werden. Der Hohlraum 5 ist mit körnigem Material (nicht dargestellt) gefüllt.

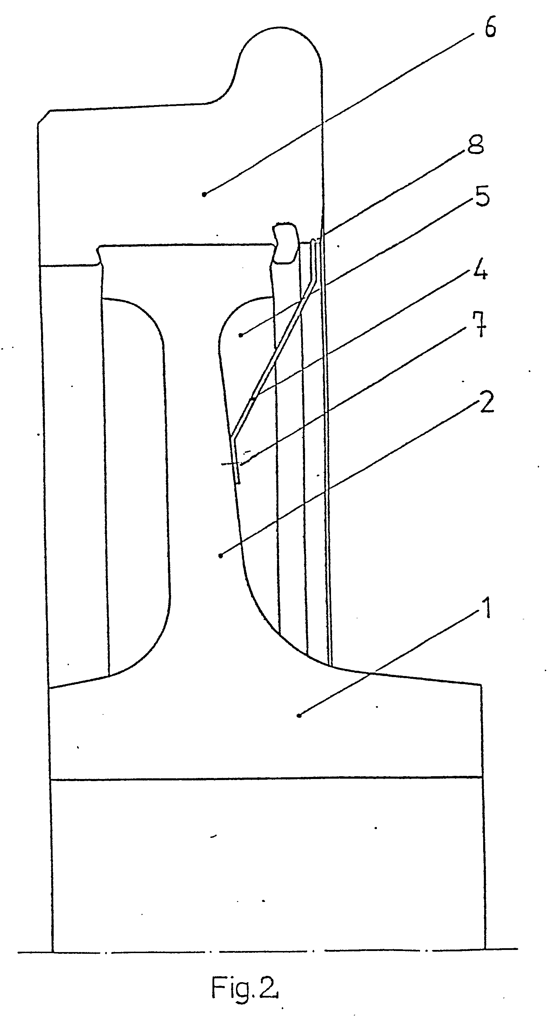

Auch bei bereiften Schienenrädern ist, wie Fig. 2 zeigt, der Gegenstand der Erfindung einsetzbar. Hier ist im Bereich des Überganges von der Radscheibe 2 zum Radreifen 6 das Profil 4 am Rad angebracht. Zusammen mit dem entsprechenden Teil der Radoberfläche bildet es den Hohlraum 5, der gemäß der Erfindung mit körnigem Material (nicht dargestellt) gefüllt ist. Das Profil 4 ist dabei einerseits im Punkt 7 an der Radscheibe durch Verschrauben oder Verschweißen befestigt, andererseits bei 8 im Radreifen eingeschrumpft. Hierdurch wird eine besonders sichere Befestigung des Profils 4 erreicht.

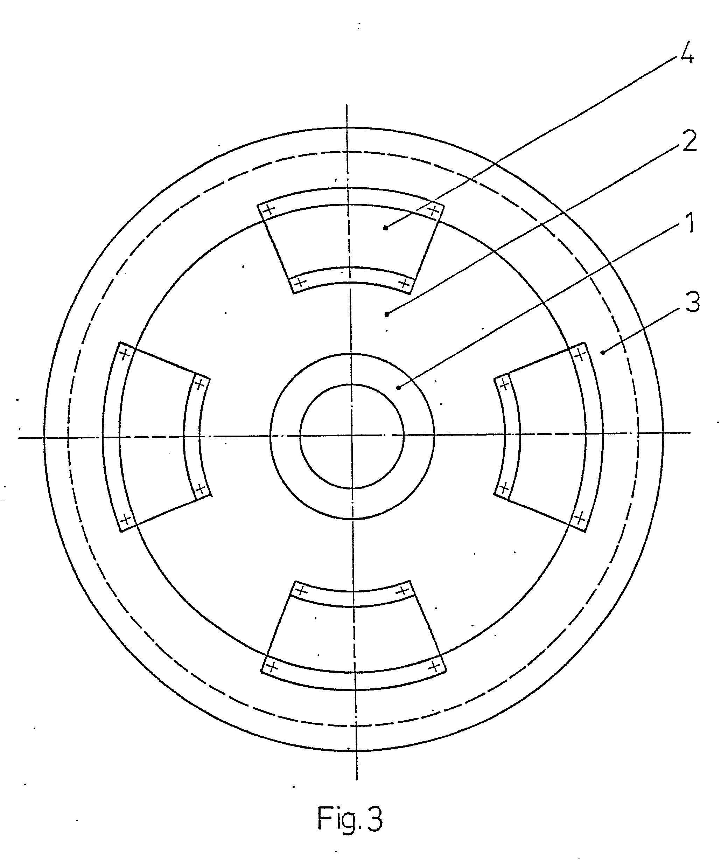

Wie in Fig. 3 dargestellt, können die Hohlräume 5 zusammen mit nicht dargestellten, stirnseitigen Abdeckblechen begrenzenden Profile 4 gleichmäßig über die Radscheibe 2 verteilt angeordnet sein. Da die Dämpfungskörper in diesem Fall an jedem Umfangsabschnitt des Rades angeordnet sind, werden die Radschwingungen am Ort ihres Entstehens getilgt, so daß die Geräuschdämpfung optimal ist.

**Patentansprüche**

1. Schwingungsgedämpftes Rad, insbesondere für Schienenfahrzeuge, mit in einem oder mehreren über den Radumfang verteilt angeordneten Hohlraum bzw. Hohlräumen (5) gefülltem, granuliertem, körnigem oder kugeligem Material als Dämpfungsmaterial, dadurch gekennzeichnet, daß der Hohlraum (5) sich im wesentlichen im Übergangsbereich zwischen Radscheibe (2) und Radkranz (3) bzw. Radfelge/Radreifen (6) befindet und daß das granulierte, körnige oder kugelige Material eine Körngröße von 0,05 bis 10 mm, insbesondere von 0,3 bis 3 mm, aufweist.

2. Rad nach Anspruch 1, dadurch gekennzeichnet, daß der Hohlraum (5) ringförmig und konzentrisch am Rad angeordnet ist.

3. Rad nach Anspruch 1 oder 2, dadurch gekennzeichnet, daß der Hohlraum (5) in mehrere Kammern unterteilt ist.

4. Rad nach Anspruch 3, dadurch gekennzeichnet, daß die Kammern mit gegenseitigem Abstand angeordnet sind.

5. Rad nach Anspruch 3 oder 4, dadurch gekennzeichnet, daß die Kammern gleichmäßig am Rad verteilt angeordnet sind.

6. Rad nach einem der Ansprüche 1 bis 5, dadurch gekennzeichnet, daß der Hohlraum (5) von einem oder mehreren Hohlkörpern gebildet ist.

7. Rad nach Anspruch 6, dadurch gekennzeichnet, daß der oder die Hohlkörper jeweils aus einem am Rad angesetzten schalenförmigen Profil (4) und der Radoberfläche bestehen.

8. Rad nach einem der Ansprüche 1 bis 7, dadurch gekennzeichnet, daß das schalenförmige Profil (4) unter Verwendung einer dichtenden Zwischenlage an der Radoberfläche befestigt ist.

9. Rad nach einem der Ansprüche 1 bis 8, dadurch gekennzeichnet, daß das schwingungsdämpfende Material ein Schüttgewicht von 0,2 bis 10 g/cm$^3$ und ein E-Modul von 100.000 bis 300.000 N/mm$^2$ hat.

10. Rad nach einem der Ansprüche 1 bis 9, dadurch gekennzeichnet, daß der Hohlraum bis zu 10% viskoses Material, z.B. Öl enthält.

## Claims

1. A vibration-damped wheel, particularly for rail cars, having granulated, granular or spherical material as damping material packed in one cavity or a plurality of cavities (5) arranged distributed over the wheel circumference, characterized in that the cavity (5) is essentially arranged in the region of the transition from the wheel disk (2) to the wheel flange (3) or to the wheel rim/tire (6) and that the granular material of granulometry from 0.05 to 10, particularly from 0.3 to 3 mm.

2. A wheel as claimed in claim 1, wherein the cavity (5) is arranged annularly and concentrically on the wheel.

3. A wheel as claimed in claim 1 or 2, wherein the cavity (5) is subdivided into a plurality of chambers.

4. A wheel as claimed in claim 3, wherein the chambers are spaced from each other.

5. A wheel as claimed in claim 3 or 4, wherein the chambers are arranged in uniform distribution on the wheel.

6. A wheel as claimed in any of the claims 1 to 5, wherein the cavity (5) is formed by one or a plurality of hollow bodies (4).

7. A wheel as claimed in any of claims 1 to 6, wherein the hollow body or bodies are formed by dished profiles (4) added to the wheel and the surface of the wheel.

8. A wheel as claimed in claim 7, wherein the dished profiles (4) are attached to the wheel surface with the use of a sealing interlayer.

9. A wheel as claimed in any of claims 1 to 8, wherein the cavities contain a material which exhibits a bulk density of 0.2 to 10 g/cm$^3$ and an E modulus of 100,000 to 300,000 N/mm$^2$.

10. A wheel as claimed in any of claims 1 to 9, wherein the cavities contain up to 10% of viscous material, for example oil.

## Revendications

1. Roue à amortissement de vibrations, en particulier pour véhicules sur rails, avec un matériau grenaillé, granulaire ou sphérique en temps que matériau amortisseur rempli dans une cavité ou plusieurs cavités (5) disposées réparties sur la périphérie de la roue, caractérisée en ce que la cavité (5) se trouve essentiellement dans la zone de jonction entre le disque de roue (2) et le rebord de roue (3) la jante de roue/pneumatique de roue, et que le matériau grenaillée, granulaire ou sphérique présente une grosseur de grain de 0,05 à 10 mm, en particulier de 0,3 à 3 mm.

2. Roue selon la revendication 1, caractérisée en ce que la cavité (5) est annulaire et disposée concentriquement sur la roue.

3. Roue selon la revendication 1 ou 2, caractérisée en ce que la cavité (5) est divisée en plusieurs chambres.

4. Roue selon la revendication 3, caractérisée en ce que les chambres sont disposées à écartement réciproque.

5. Roue selon la revendication 3 ou 4, caractérisée en ce que les chambres sont réparties régulièrement sur la roue.

6. Roue selon les revendications 1 à 5, caractérisée en ce que la cavité (5) est formée par un ou plusieurs corps creux.

7. Roue selon la revendication 6, caractérisée en ce que le ou les corps creux (4) sont constitués à chaque fois par un profilé en forme de cuvette ajusté sur la roue et la surface de la roue.

8. Roue selon l'une des revendications 1 à 7, caractérisée en ce que le profilé en forme de cuvette (4) est fixé à la surface de la roue en utilisant une pièce intermédiaire d'étanchéité.

9. Roue selon l'une des revendications 1 à 8, caractérisée en ce que le matériau amortisseur de vibrations a une densité apparente de 0,2 à 10 g/cm$^3$ et un coefficient d'élasticité de 100.000 à 300.000 N/mm$^2$.

10. Roue selon l'une des revendications 1 à 9, caractérisée en ce que la cavité contient jusqu'à 10% de matériau visqueux, par exemple d'huile.

Fig. 1

Fig.2

Fig. 3